# EUROPÄISCHE PATENTANMELDUNG

(11) **EP 0 703 104 A1**
(43) Veröffentlichungstag der Anmeldung: **27.03.1996**
(21) Anmeldenummer: 94115041.9
(22) Anmeldetag: 23.09.1994
(51) Int. Cl.: B60H 1/34

(54) **Ausströmdüse einer Heizungs- und/oder Klimaanlage, insbesondere für ein Kraftfahrzeug**

(71) Anmelder: Valeo Klimasysteme GmbH, 96476 Rodach (DE)
(72) Erfinder: Schwarz, Stefan, Dipl.-Ing. (FH), D-96450 Coburg (DE)
(74) Vertreter: COHAUSZ HASE DAWIDOWICZ & PARTNER

(57) **Zusammenfassung**

Um trotz individueller Einstellmöglichkeit definierter Luftstrahlrichtungen ein einheitliches, nicht von unterschiedlichen Stellungen von Richtlamellen bzw. Einstellmitteln gestörtes innenraumseitiges Frontdesign erreichen zu können, sind Richtlamellen (L1-L8) hinter einer strömungsrichtungsneutralen Frontblende (F) durch eine kurze Einstell-Schwenkbewegung mit anschließender Rückstellung der Frontblende (F) in eine entsprechende Verweilstellung mitnehmbar.

## Beschreibung

Die Erfindung bezieht sich auf eine Ausströmdüse einer Heizungs- und/oder Klimaanlage, insbesondere für ein Kraftfahrzeug, gemäß Anspruch 1.

Durch die EP-A3-0 210 548 ist eine Ausströmdüse für eine Heizungs- und/oder Klimaanlage für den Innenraum von Kraftfahrzeugen bekannt, bei dem mittig in der Frontseite ein gesonderter Bedienknopf zur horizontalen und vertikalen Strahlungsrichtung-Einstellung des durch die Ausströmdüse geförderten Luftstroms verstellbar angeordnet ist.

Gemäß Aufgabe vorliegender Erfindung soll die Möglichkeit geschaffen werden, einerseits den aus der Ausströmdüse austretenden Luftstrom mit einfacher und übersichtlicher Bedienbarkeit definiert ablenken zu können und andererseits bei einfacher Fertigung und Montage sowie kompakter Bauform eine von der Anordnung von Bedienelementen freie Gestaltungsmöglichkeit des Frontdesigns der Ausströmdüse zu ermöglichen. Die Lösung dieser Aufgabe gelingt durch die Lehre des Anspruchs 1; vorteilhafte Ausgestaltungen der Erfindung sind jeweils Gegenstand der Unteransprüche.

Durch das erfindungsgemäße Mitbenutzen der kurzzeitig verschwenkbaren Frontblende selbst als Bedienelement für die in eine bestimmte Schwenkstellung zu bringenden Richtungslamellen hinter der Frontblende kann auf besondere frontseitige Bedienmittel verzichtet und somit die Frontblende rein nach designerischen Gesichtpunkten ohne eigene Strahlungsrichtung ausgelegt werden. Zweckmäßigerweise ist zur Einstellung sowohl einer horizontalen Richtungscharakteristik als auch einer vertikalen Richtungscharakteristik der Luftströme eine erste Richtlamellenanordnung sowie eine zweite Richtlamellenanordnung vorgesehen, wobei die Schwenkachsen der Richtlamellen der einen Richtlamellenanordnung im wesentlichen senkrecht zur Schwenkachse der Richtlamellen der anderen Richtlamellenanordnung angeordnet ist; die Einstellung beider Richtlamellenanordnungen durch das Verstellmittel der Frontblende selbst kann in diesem Fall in besonders einfacher Weise dadurch erreicht werden, daß eine erste Verschwenkebene der Frontblende der einen Richtlamellenanordnung und eine zweite zweckmäßigerweise dazu senkrechte Verschwenkebene der Frontblende der anderen Richtlamellenanordnung zugeordnet ist, wobei nach Art einer kardanischen Halterungg der Frontblende relativ zu dem Düsengehäuse der Ausströmdüse in der ersten Verschwenkebene die Frontblende konzentrisch um eine in dem Düsengehäuse gelagerte Achse und in der zweiten Verschwenkebene die Achse selbst mit der Frontblende relativ zu dem Düsengehäuse verschwenkbar ist.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in einer perspektivischen Explosionsdarstellung die wesentlichen Bauteile einer erfindungsgemäßen Ausströmdüse;

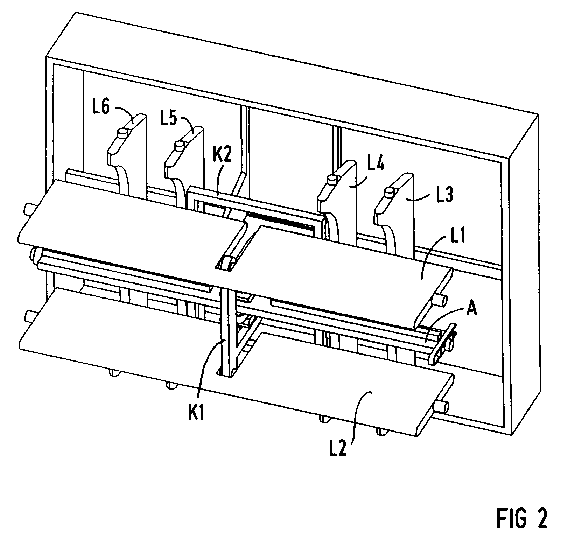

- FIG 2: die Anordnung gemäß FIG 1 nach dem Zusammenbau, jedoch ohne Frontblende und Frontblendengehäuse;

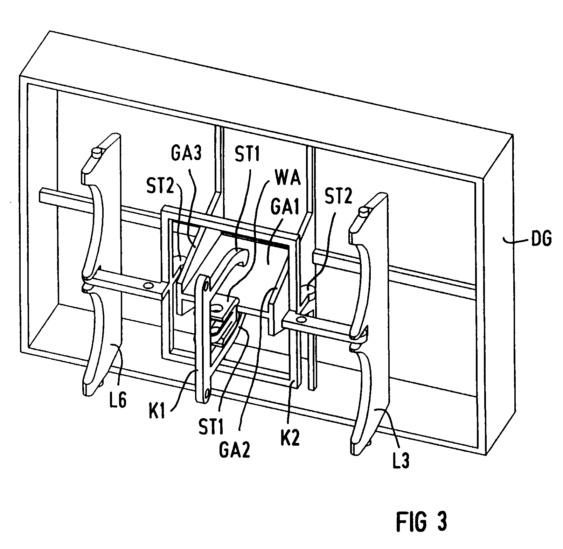

- FIG 3: die Anordnung gemäß FIG 1 in teilweisem Zusammenbau mit einer ersten Richtlamellenanordnung und einer ersten Koppelstange sowie mit einer zweiten Richtlamellenanordnung und einer zweiten Koppelstange;

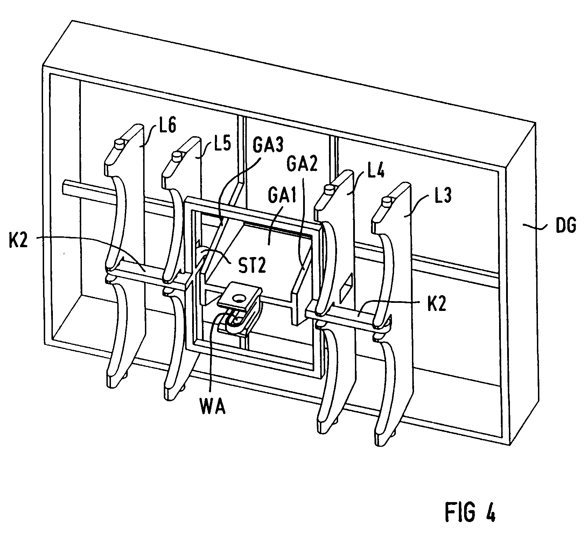

- FIG 4: die Anordnung gemäß FIG 1 in teilweisem Zusammenbau mit nur der zweiten Richtlamellenanordnung;
- FIG 5-8: jeweils in einem Schnittbild vier Einstellungen der waagrechten Richtlamellen der ersten Richtlamellenanordnung.

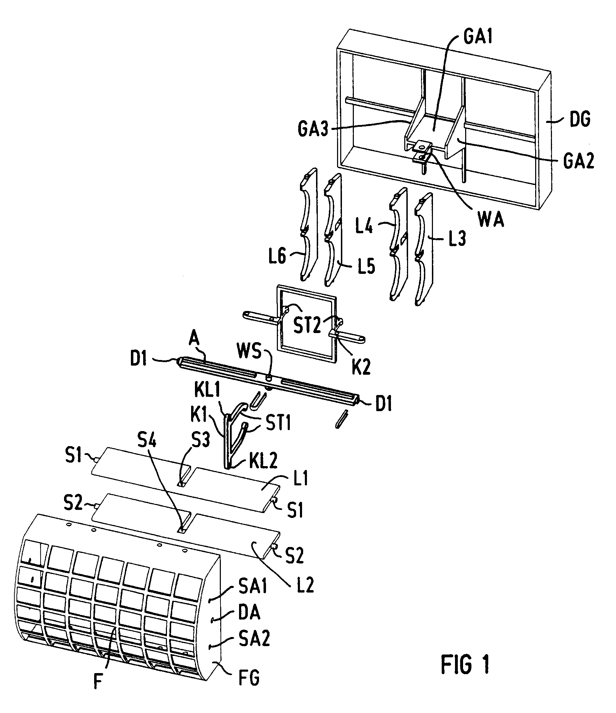

FIG 1 zeigt in einer perspektivischen Explosionsdarstellung eine Ausströmdüse, die rückseitig ein Düsengehäuse DG und frontseitig eine Frontblende F in einem Frontblendengehäuse FG aufweist. Im Frontblendengehäuse FG sind relativ zu diesem schwenkbar Horizontallamellen L1;L2 einer ersten Richtlamellenanordnung und Vertikallamellen L3-L6 einer dahinter angeordneten zweiten Richtlamellenanordnung schwenkbar gelagert. Zur Verdeutlichung der schwenkbaren Lagerung sind Schwenkachsen der ersten Richtlamellen L1 mit Bezugszeichen S1 und der zweiten Richtlamelle mit Bezugszeichen S2 versehen, die in Schwenkzapfenaufnahmen SA1 bzw. SA2 des Frontblendengehäuses FG lagerbar sind. In ähnlicher Weise sind die Vertikal-Lamellen L3-L6 mit endseitigen Schwenkzapfen versehen, die in korrespondierende Schwenkzapfenaufnahme der oberen und unteren Wandung des Frontblendengehauses FG lagerbar sind.

Die Frontblende F bzw. das Frontblendengehäuse FG ist kreuzgelenkartig bzw. kardanisch im Sinne zweier, vorzugsweise senkrecht zueinander ausgerichteter Verschwenkebenen in dem Düsengehäuse DG gelagert, wobei je eine Verschwenkebene je einer unterschiedlichen Richtlamellenanordnung zugeordnet ist. Das gesamte Frontblendengehäuse FG ist dazu nach einer Ausgestaltung der Erfindung einerseits dadurch um eine waagrechte Frontblenden-Achse A verschwenkbar, daß endseitige Drehzapfen D1;D1 der Frontblenden-Achse A in Lageraufnahmen DA des Frontblendengehäuses FG eingreifen und andererseits durch um eine dazu senkrechte Achse dadurch verschwenkbar, daß ein mittiger Wellenstummel WS der Frontblenden-Achse A in zu dieser senkrechter Richtung in einer Wellenstummel-Aufnahme WA des Düsengehäuses DG aufgenommen ist.

Die waagrechten Richtlamellen L1;L2 der ersten Richtlamellenebene sind über eine Koppelstange K1 derart verbunden, daß sämtliche Richtlamellen dieser Richtlamellenebene durch die Koppelstange K1 gemeinsam um ihre Schwenkzapfen verschwenkbar sind; zur gegenseitigen Ankopplung dienen in der Koppelstange K1 Koppelstangenkupplungen KL1 bzw. KL2, denen entsprechende Koppelstangenachsen S3 bzw. S4 der ersten Richtlamelle L1 bzw. der zweiten Richtlamelle L2 zugeordnet sind.

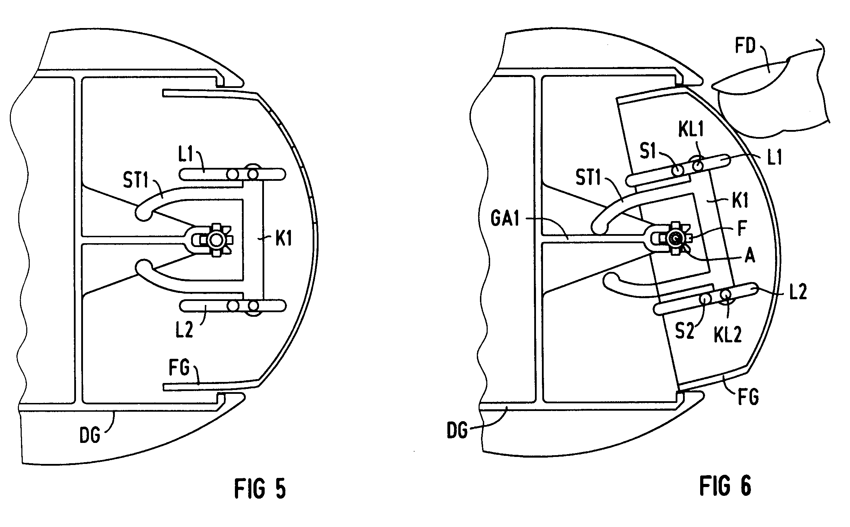

Die Verstellung der Richtlamellen L1 bzw. L2 der ersten Richtlamellenanordnung durch kurzzeitiges Verschwenken der Frontblende F um ihre Frontblenden-Achse A in der einen oder anderen Richtung wird im folgenden anhand des in den Figuren 5-8 dargestellten Betätigungsablaufs näher erläutert:

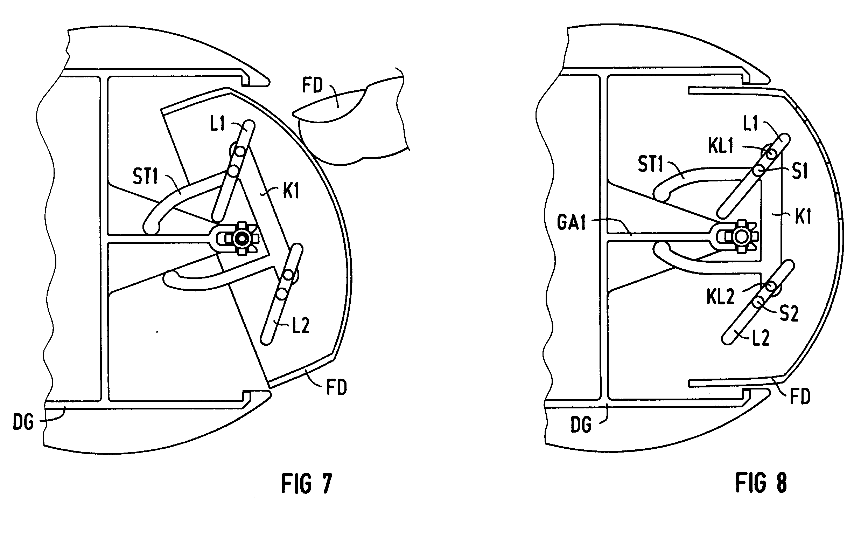

In FIG 5 befindet sich die Frontblende F in ihrer normalen Betriebsstellung; die horizontalen Richtlamellen L1 bzw.L2 sind im Sinne einer waagrechten Strömungscharakteristik eingestellt. Wird nun gemäß FIG 6, z.B. durch einen Fingerdruck FD, die Frontblende F um die Achse A in die dort dargestellte Lage gekippt, so kommt die Koppelstange K1 nach einem gewissen Totweg über einen vorstehenden Stößel ST1 bzw. ST2 in Berührung mit einem Düsengehäuse-Anschlag GA1. Bei weiterem Verschwenken der Frontblende F gemäß FIG 7 wird unter Vermittlung des an dem Düsengehäuse-Anschlag GA1 anliegenden Stößels ST1 die Koppelstange K1 relativ zur Frontblende F derart bewegt, daß die horizontalen Richtlamellen L1 bzw.L2 im Sinne einer nach schräg oben gerichteten Strömungscharakteristik des aus der Düse austretenden Luftstromes um ihre Schwenkzapfen S1 bzw.S2 verschwenkt werden. Nach dieser kurzzeitigen Verschwenkung der Frontblende F kann diese entweder durch entgegengesetzten Fingerdruck oder durch eine zuvor selbsttätig gespannte Federvorrichtung in ihre designerisch optimale Normalbetriebsstellung gemäß FIG 5 zurückschwenken, wobei die Richtlamellen L1 bzw.L2, z.B. aufgrund eines entsprechenden Reibschlusses, in ihrer Verschwenkstellung verbleiben. Bei entgegengesetztem Verschwenken der Frontblende F werden - ähnlich wie zuvor beschrieben - die Richtlamellen L1 bzw.L2 dadurch nach unten verstellt, daß nach einem gewissen Totweg der untere Stößel ST2 der Koppelstange K1 gegen den Düsengehäuse-Anschlag GA zur Anlage kommt und anschließend die Koppelstange K1 im Sinne einer Verstellung der Richtlamellen L1 bzw.L2 nach schräg unten weiterbewegt wird.

Die Verstellung der Vertikallamellen L3-L6 der zweiten Richtlamellenanordnung erfolgt in vorteilhafter Weise wiederum durch Verschwenken der Frontblende F bzw. des Frontblendengehäuse FG, wobei eine zweite, insbesondere zur ersten senkrechten, Verschwenkebene durch entsprechendes Verschwenken der Achse A selbst mit der Frontblende relativ zu dem Düsengehäuse DG erfolgt; dazu weist die Achse A mittig einen Wellenstummel WS auf, der von einer Wellenstummel-Aufnahme WA des Düsengehäuses DG mit einer zur Achse A senkrechten Drehrichtung gehaltert wird.

Die senkrechten Richtlamellen L3-L6 der zweiten Richtlamellenanordnung sind ähnlich wie im Fall der ersten Richtlamellenanordnung durch eine Koppelstange K2 gemeinsam verstellbar, wobei diese Koppelstange mittig zum Umgreifen der Wellenstummel-Aufnahme WA, z.B. in Form eines rechteckförmigen Rahmens, ausgebildet ist. Zum Verstellen der vertikalen Richtlamellen L3-L6 wird die Achse A in der einen oder anderen Richtung waagrecht um den Wellenstummel WS kurzzeitg verschwenkt; dabei kommen nach Überwindung einer gewissen Totstrecke an die Koppelstange K2 abstehend angeformte Stößel ST2 gegen Düsengehäuse-Anschläge GA2 bzw.GA3 zur Anlage, derart daß bei weiterem Verschwenken der Frontblende F bzw. des Frontblendengehäuses FG die Richtlamellen der zweiten Richtlamellenanordnung unter Vermittlung der Koppelstange K2 in eine gezielte Schrägstellung mitgenommen werden. Beim anschließenden Rückdrücken bzw. Rückfedern der Frontblende F bzw. des Frontblendengehäuses FG in die normale Betriebsstellung verbleiben die Richtlamellen L3-L6 der zweiten Richtlamellenebene, z.B. aufgrund eines entsprechenden Reibschlusses, in ihrer zuvor eingenommenen Schrägstellung.

Es dürfte ersichlich sein, daß durch die erfindungsgemäß ausgebildete Ausströmdüse auf einfache Weise ohne Notwendigkeit eines besonderen Bedienknopfes lediglich durch kurzes Antippen der Frontblende eine vertikale Richtlamellenanordnung und davon unabhängig eine horizontale Richtlamellenanordnung auf einfache Weise einstellbar sind.

## Patentansprüche

1. Ausströmdüse einer Heizungs- und/oder Klimaanlage, insbesondere für ein Kraftfahrzeug, mit einer vorzugsweise strömungsrichtungsneutralen Frontblende (F), die relativ zu einem diese aufnehmenden Düsengehäuse (DG) aus ihrer Betriebs-Normalstellung verschwenkbar ist, und mit hinter der Frontblende (F) relativ zu dieser verstellbaren strömungsrichtungsbestimmenden Richtlamellen (L1;L2), die durch eine kurze Einstell-Schwenkbewegung mit anschließender Rückstellung der Frontblende (F) in der einen oder anderen Richtung in eine entsprechende Verweilstellung mitnehmbar sind.

2. Ausströmdüse nach Anspruch 1 mit einer ersten Richtlamellenanordnung (L1;L2) mit einer ersten Strömungsrichtungseinstellbarkeit und mit einer zweiten Richtlamellenanordnung (L3-L6) mit einer zweiten, im wesentlichen zur ersten senkrechten, Strömungsrichtungseinstellbarkeit.

3. Ausströmdüse nach Anspruch 2 mit in Strömungsrichtung hintereinander angeordneter erster Richtlamellenanordnung (L1;L2) und zweiter Richtlamellenanordnung (L3-L6).

4. Ausströmdüse nach zumindest einem der Ansprüche 1-3 mit einer kreuzgelenkartigen Halterung der Frontblende (F) in dem Düsengehäuse (DG).

5. Ausströmdüse nach Anspruch 4 mit einer ersten Verschwenkebene der Frontblende (F) durch konzentrisches Verschwenken (L1;L2) der Frontblende (F) um eine im Düsengehäuse (DG) gelagerte Achse (A) und mit einer zweiten, insbesondere zur ersten senkrechten, Verschwenkebene der Frontblende (F) durch entsprechendes Verschwenken der Achse (A) mit der Frontblende (F) relativ zu dem Düsengehäuse (DG).

6. Ausströmdüse nach zumindest einem der Ansprüche 4 und/oder 5 mit jeweils einer Zuordnung der einen Verschwenkebene zu der einen Richtlamellenanordnung und der anderen Verschwenkebene zu der anderen Richtlamellenanordnung.

7. Ausströmdüse nach zumindest einem der Ansprüche 4-6 mit einer um axial äußere Drehzapfen (D1;D1) der Achse (A) in der ersten Verschwenkebene verschwenkbaren Frontblende (F) und einer um einen mittigen Wellenstummel (WS) in einer Wellenstummelaufnahme (WA) des Düsengehäuses (DG) in der zweiten Verschwenkebene verschwenkbaren Achse (A) bzw. Frontblende (F).

8. Ausströmdüse nach zumindest einem der Ansprüche 1-7 mit einer selbsttägigen, insbesondere bei vorheriger Einstell-Schwenkbetätigung elastisch vorgespannten, Rückstellung der Frontblende (F) aus ihrer vorrübergehenden Einstell-Schwenkstellung in ihre Betriebs-Normalstellung.

9. Ausströmdüse nach zumindest einem der Ansprüche 1-8 durch eine reibschlüssige Selbsthalterung der Richtlamellen (L1;L2 bzw.L3-L6) in ihrer Verweilstellung.

10. Ausströmdüse nach zumindest einem der Ansprüche 1-9 mit je Richtlamellenanordnung (L1;L2 bzw.L3-L6) durch zumindest eine Koppelstange (K1;K2) außerhalb ihrer Schwenklagerung gekoppelten und beim Verschwenken der Frontblende(F) durch Anschlag der Koppelstange (K1 bzw.K2) an einen Gehäuse-Anschlag (GA1 bzw.GA2;GA3) verstellten Richtlamellen.
